## Europäisches Patentamt

## European Patent Office

## Office européen des brevets

(11) Publication number: **0 079 116**
**B1**

(12) **EUROPEAN PATENT SPECIFICATION**

(45) Date of publication of patent specification: **23.04.86**

(51) Int. Cl.⁴: **F 16 J 15/34**

(21) Application number: **82304594.3**

(22) Date of filing: **01.09.82**

(54) Improved mechanical seal assembly.

(30) Priority: **23.10.81 US 314302**
**30.06.82 US 393580**

(43) Date of publication of application:
**18.05.83 Bulletin 83/20**

(45) Publication of the grant of the patent:
**23.04.86 Bulletin 86/17**

(84) Designated Contracting States:
**DE FR GB NL**

(56) References cited:
**DE-A-2 302 600**
**DE-A-2 647 016**
**DE-C- 718 314**
**US-A-3 144 253**
**US-A-3 628 799**

**K. TRUTNOVSKY "Berührungsdichtungen", 2nd
edition 1975, SPRINGER-VERLAG, Berlin,
Heidelberg, New York, page 247**

(73) Proprietor: **BORG-WARNER CORPORATION**
**200 South Michigan Avenue**
**Chicago Illinois 60604 (US)**

(72) Inventor: **Wiese, Winfred John**
**14821 Hayward Street**
**Whittier California 90603 (US)**

(74) Representative: **Allden, Thomas Stanley et al**
**A.A. THORNTON & CO. Northumberland House**
**303-306 High Holborn**
**London WC1V 7LE (GB)**

(56) References cited:

**"Soviet Inventions Illustrated", week B47. 9
Januar 1980, Section Q 65 & SU - A - 649916**

**KONSTRUKTION, vol. 26, no.6, June 1974,
Berlin, Heidelberg, New York H.K. MÜLLER
"Gleitringdichtungen - Vorgänge im Dichtspalt"
pages 207 to 214**

Courier Press, Leamington Spa, England.

## Description

In U.S. Application No. 3628799 owned by Borg-Warner Corporation there is disclosed a mechanical seal assembly for sealing a rotary shaft to a housing having a shaft opening through which the shaft extends, the mechanical seal assembly comprising rotatable sealing ring means connected to the shaft for rotation therewith and for limited axial movement relative to the shaft, the rotatable sealing ring means being subject to radially directed hydraulic pressure within the housing, stationary sealing ring means connected to the housing, the rotatable and stationary sealing ring means having opposed, generally radial sealing surfaces, and means for urging the rotatable and stationary sealing ring means toward one another. Distortion of the radial sealing surfaces tends to occur with attendant leakage between them. If the degree of distortion can be predicted, then the sealing ring means can be designed to keep the distortion within acceptable limits.

E. Mayer in his book "Mechanical Seals", 2nd Edition, 1972 ILIFFE Books, London, discloses in Chapter 4.3.2 Radial forces (pages 49 to 51) a mechanical seal assembly of the kind specified above and describes a formula for seal face distortion based upon a cantilever beam analogy as shown on page 49 in which a thin deflectable member extends from a thick rigid member, and this derived formula is then applied to the seal assembly depicted in Figure 4 on page 51. In the result, the rotatable sealing ring means is of somewhat complex cross-section and may be considered to be made up of a pair of first and second spaced ring sections each formed as a straight cylinder of different internal and external diameters, the sealing face being on the second ring section having the smaller internal and external diameters, with a third ring section between those pair of ring sections and integral therewith, the third ring section having its external diameter equal to the external diameter of the second ring section and its internal diameter equal to that of the first ring section. The resultant unitary sealing ring thus has its cross-section stepped internally and externally with those two steps axially spaced apart.

In accordance with the present invention as claimed, a mechanical seal assembly of the kind specified is characterised in that:

(a) the rotatable sealing ring means is constructed solely of a pair of integral ring sections formed as straight cylinders having the same axial length, the sealing surface being an end face on one such ring section;

(b) each ring section shrinks under a predetermined hydraulic pressure in accordance with the equation:

$$ U = \frac{bp}{E} \left( \frac{a^2 + b^2}{b^2 - a^2} - V \right) $$

where

    U=shrinkage under hydraulic pressure
    a=inside radius of ring portion
    b=outside radius of ring portion
    p=hydraulic pressure
    E=modulus of elasticity; and
    V=Poisson's ratio

(c) the sealing surface distorts in accordance with the relative shrinkage of the ring sections under the predetermined hydraulic pressure; and

(d) the rotatable sealing means is stepped with one of the ring sections having inner and outer diameters greater than the respective diameters of the other ring section, the inner and outer diameters being selected in accordance with the equation so that the relative shrinkages of the pair of ring sections under the predetermined hydraulic pressure will result in the sealing surface distorting to a desired configuration.

The advantage of the invention is that the rotatable sealing ring means formed simply of two adjacent integral ring sections of different internal and external diameters and of the same axial length can be treated mathematically as a free body rather than as a cantilever beam as in the Mayer formula, the formula to determine shrinkage is simpler than the Mayer formula, and the evaluation of the sealing face distortion proceeds from the assumption that both ring sections shrink, although differently, and the difference predicts the distortion. Thus, the invention discloses a more straightforward solution to the problem of predicting seal face distortion.

In order that the invention may be well understood there will now be described an embodiment thereof, given by way of example, with reference to the accompanying drawing, in which:

Fig. 1 illustrates in section a mechanical seal assembly constructed according to this invention; and

Fig. 2 is a perspective view of a rotatable sealing ring means usable in the Fig. 1 seal assembly.

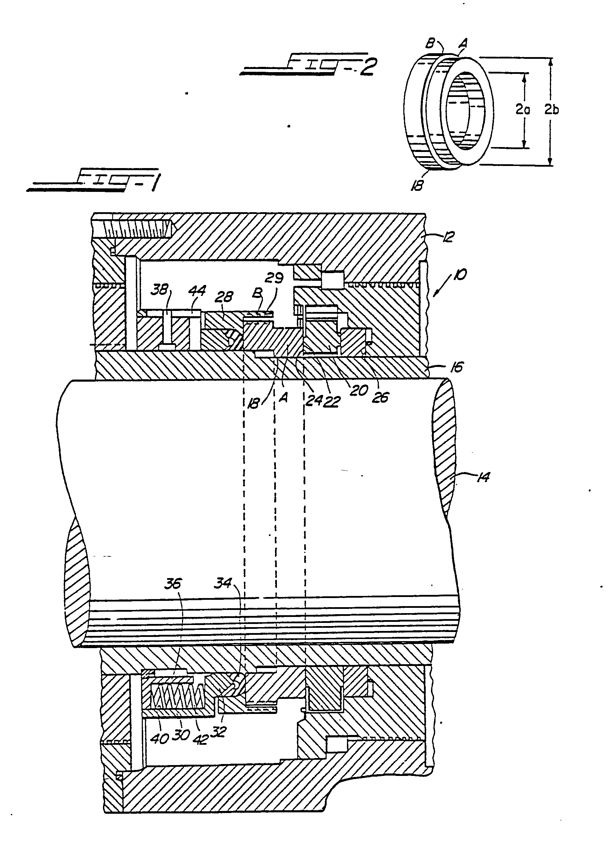

As shown in Fig. 1, a mechanical seal assembly 10 includes a multiple part housing 12 with a shaft 14 extending therethrough. A shaft sleeve 16 closely surrounds the shaft 14 and is keyed or otherwise fastened (not shown) to the shaft for rotation with the shaft. The seal assembly 10 further comprises a rotating sealing ring means 18 and a stationary sealing ring means 20, the sealing ring means 18 and 20

2

having lapped seal faces 22 and 24, respectively, opposed to one another. The sealing ring means 20 is keyed to the housing 12 and is backed by a back-up ring 26 sealed to the housing 12.

The rotatable sealing ring means 18 is keyed to a sealing ring holder 28 by a key 29, which is in turn keyed to a U-cup follower 30 having a nose 32 engaging a U-cup 34 fitting within the holder 28 and abutting the rear of the sealing ring means 18. The U-cup follower 30 is drivingly connected to an annular spring holder 36 by a drive pin 38, the spring holder 36 having a plurality of longitudinally extending spring pockets 40, each receiving a spring 42 urging the U-cup follower toward the U-cup 34 and the sealing ring means 18 toward the other sealing ring means 20. As illustrated, drive pin 38 fits into a slot 44 in U-cup follower 30, permitting longitudinal movement of the latter while insuring rotation thereof with the shaft and shaft sleeve. The arrangement of parts as described is generally conventional and shown in our earlier U.S. patent No. 3,628,799, granted December 21, 1971. Conventionally, O-ring seals are used where necessary and/or desirable.

The rotary seal ring means 18 unlike that disclosed in our earlier patent is of stepped configuration and comprises what, while of unitary construction may be described as being constructed of two simple ring sections each formed as a straight cylinder, identified as A and B. The sections A and B are illustrated as being separated by a broken line for purposes of discussion. The sections A and B have the same axial length as measured in the direction of the shaft 14.

By making the longitudinal sections of the ring sections A and B so that both shrink the same amount under hydraulic load or pressure, the flatness of the end face 22 will remain unchanged.

If, however, it is desirable to have the end face 22 become concave under pressure, the ring section A must be sized so that it shrinks more than the ring section B. Conversely, if the end face 22 is to become convex under pressure, the ring section B must shrink more than the ring section A.

The shrinkage of the ring section A or B can be calculated by using an equation for determining compressive hoop stress in cylinders, namely:

$$U = \frac{bp}{E} \left( \frac{a^2+b^2}{b^2-a^2} - V \right)$$

where

U=shrinkage
a=inside radius
b=outside radius
p=pressure
E=modulus of elasticity; and
V=Poisson's ratio

Fig. 2 illustrates the sealing ring means 18 with the radii of one ring section noted thereon.

As an example for a rotatable sealing ring made of titanium carbide which has a modulus of elasticity of $5.9 \times 10^7$ and Poisson's ratio of 0.236, subjected to a working pressure of 4309375 Pa, the shrinkage of ring sections A and B for given inner and outer diameters will be as in the following chart:

| | Ring section | O.D. (2b) (mm) | I.D. (2a) (mm) | Shrinkage μm |
|---|---|---|---|---|
| Case 1 | A | 219.07 | 187.58 | 7.262 |
| | B | 207.34 | 178.76 | 7.201 |
| Case 2 | A | 215.90 | 187.58 | 7.915 |
| | B | 206.37 | 178.76 | 7.404 |
| Case 3 | A | 222.25 | 187.58 | 6.728 |
| | B | 206.37 | 178.76 | 7.404 |

With the inner and outer diameter dimensions shown in Case 1, the amount of shrinkage is substantially the same; therefore the face 22 will remain substantially flat. In Case 2, ring section A shrinks more than ring section B; therefore, the face 22 will become concave. In Case 3, ring section B shrinks more than ring section A; therefore the face 22 will become convex.

Thus, the ratio of inner and outer diameters of the pair of ring sections can be selected to provide the desired degree of distortion of the seal surface of the rotatable sealing ring means.

**Claims**

1. A mechanical seal assembly (10) for sealing a rotary shaft (14) to a housing (12) having a shaft opening through which the shaft (14) extends, comprising rotatable sealing ring means (18) connected to said shaft (14) for rotation therewith and for limited axial movement relative to said shaft (14), said

3

rotatable sealing ring means (18) being subject to radially directed hydraulic pressure within said housing (12), stationary sealing ring means (20) connected to said housing (12), said rotatable (18) and stationary (20) sealing ring means having opposed, generally radial sealing surfaces (22, 24), and means (42) for urging said sealing ring means (18, 20) toward one another, characterised in that:

(a) said rotatable sealing ring means (18) is constructed solely of a pair of integral ring sections (A, B) formed as straight cylinders having the same axial length, the sealing surface (22) being an end face on one such ring section (A);

(b) each ring section (A, B) shrinks under a predetermined hydraulic pressure in accordance with the equation:

$$U=\frac{bp}{E}\left(\frac{a^2+b^2}{b^2-a^2}-V\right)$$

where
U=shrinkage under hydraulic pressure
a=inside radius of ring portion
b=outside radius of ring portion
p=hydraulic pressure
E=modulus of elasticity; and
V=Poisson's ratio

(c) the sealing surface (22) distorts in accordance with the relative shrinkages of the ring sections (A, B) under the predetermined hydraulic pressure; and

(d) the rotatable sealing means is stepped with one of said ring sections (A, B) having inner and outer diameters greater than the respective diameters of the other ring section (A, B), the inner and outer diameters being selected in accordance with said equation so that the relative shrinkages of the pair of ring sections (A, B) under the predetermined hydraulic pressure will result in the sealing surface (22) distorting to a desired configuration.

2. A mechanical seal assembly as claimed in claim 1, in which the shrinkage of the ring section (A) having the sealing surface (22) is substantially the same as that of the other ring section (B).

3. A mechanical seal assembly as claimed in claim 1, in which the shrinkage of the ring section (A) having the sealing surface (22) is greater than that of the other ring section (B).

4. A mechanical seal assembly as claimed in claim 1, in which the shrinkage of the ring section (A) having the sealing surface (22) is less than that of the other ring section (B).

**Patentansprüche**

1. Gleitringdichtung (10) zur Abdichtung einer drehbaren Welle (14) gegenüber einem Gehäuse (12), das eine Wellenöffnung aufweist, durch die sich die Welle (14) erstreckt, mit einem drehbaren Dichtungsring (18), der mit der Welle (14) verbunden ist, sich zusammen mit dieser dreht und eine begrenzte Axialbewegung relativ zur Welle (14) ausführen kann, wobei der drehbare Dichtungsring (18) einem radial gerichteten hydraulischen Druck im Gehäuse (12) ausgesetzt ist, einem stationären Dichtungsring (20), der mit dem Gehäuse (12) verbunden ist, wobei der drehbare (18) und stationäre (20) Dichtungsring gegenüberliegende, allgemein radial Dichtungsflächen (22, 24) aufweisen, und einer Einrichtung (42) zum Pressen der Dichtungsringe (18, 20) gegeneinander, dadurch gekennzeichnet, daß

(a) der drehbare Dichtungsring (18) allein aus zwei einstückig miteinander ausgebildeten Ringab- schnitten (A, B) besteht, die als gerade Zylinder mit gleicher Axiallänge ausgebildet sind, wobei die Dichtungsfläche (22) eine Endfläche an einem Ringabschnitt (A) darstellt;

(b) jeder Ringabschnitt (A, B) unter einem vorgegebenen hydraulischen Druck nach der folgenden Gleichung

$$U=\frac{bp}{E}\left(\frac{a^2+b^2}{b^2-a^2}-V\right)$$

schrumpft, wobei bedeuten
U=des Schrumpfmaß unter dem hydraulischen Druck
a=der Innenradius des Ringabschnittes
b=der Außenradius des Ringabschnittes
p=der hydraulische Druck
E=der Elastizitätsmodul; und
V=das Poisson'sche Verhältnis.

(c) sich die Dichtungfläche (22) in Abhängigkeit vom relativen Schrumpfmaß der Ringabschnitte (A, B) unter dem vorgegebenen hydraulischen Druck verformt; und

(d) der drehbare Dichtungsring abgestuft ist, wobei einer der Ringabschnitte (A, B) einen Innen- und Außendurchmesser aufweist, die größer sind als die entsprechenden Durchmesser des anderen Ringabschnittes (A, B), und wobei der Innen- und Außendurchmesser in Abhängigkeit von der vorstehend genannten Gleichung so ausgewählt sind, daß das relative Schrumpfmaß der beiden Ringabschnitte (A, B) unter dem vorgegebenen hydraulischen Druck zu einer Verformung der Dichtungsfläche (22) zu einer gewünschten Gestalt führt.

2. Gleitringdichtung nach Anspruch 1, dadurch gekennzeichnet, daß das Schrumpfmaß des Ringabschnittes (A), der die Dichtungsfläche (22) aufweist, im wesentlichen dem des anderen Ringabschnittes (B) entspricht.

3. Gleitringdichtung nach Anspruch 1, dadurch gekennzeichnet, daß das Schrumpfmaß des Ringabschnittes (A), der die Dichtungsfläche (22) aufweist, größer ist als das des anderen Ringabschnittes (B).

4. Gleitringdichtung nach Anspruch 1, dadurch gekennzeichnet, daß das Schrumpfmaß des Ringabschnittes (A), der die Dichtungsfläche (22) aufweist, geringer ist als das des anderen Ringabschnittes (B).

## Revendications

1. Joint mécanique assemblé (10) afin de rendre étanche un arbre tournant (14) vis-à-vis d'un logement (12) présentant une ouverture pour arbre à travers laquelle s'étend l'arbre (14), comprenant un moyen de bague d'étanchéité rotative (18) connecté à l'arbre (14) pour rotation avec lui et pour mouvement axial limité par rapport à l'arbre (14), ce moyen de bague d'étanchéité rotative (18) étant sujet à une pression hydraulique dirigée radialement à l'intérieur du logement (12), un moyen de bague d'étanchéité fixe (20) connecté au logement (12), les moyens de bague d'étanchéité rotative (18) et fixe (20) ayant des surfaces d'étanchéité (22, 24) opposées, généralement radiales, et un moyen (42) pour solliciter les moyens de bague d'étanchéité (18, 20) l'un vers l'autre, caractérisé en ce que:

(a) le moyen de bague d'étanchéité rotative (18) est composé uniquement d'une paire de sections de bague en une pièce (A, B) formées comme des cylindres rectilignes ayant la même longueur axiale, la surface d'étanchéité (22) étant une face extrême sur chaque section de bague (A);

(b) chaque section de bague (A, B) se contracte sous une pression hydraulique prédéterminée en conformité avec l'équation:

$$U = \frac{bp}{E} \left( \frac{a^2 + b^2}{b^2 - a^2} - V \right)$$

où

U=contraction sous l'effet de la pression hydraulique
a=rayon intérieur de la partie à bague
b=rayon extérieur de la partie à bague
p=pression hydraulique
E=module d'élasticité; et
V=rapport de Poisson

(c) la surface d'étanchéité (22) se déforme en conformité avec les contractions relatives des sections de bague (A, B) sous l'effet de la pression hydraulique prédéterminée; et

(d) le moyen d'étanchéité rotatif est en gradin avec l'une des sections de bague (A, B) ayant des diamètres intérieur et extérieur supérieurs aux diamètres respectifs de l'autre section de bague (A, B) les diamètres intérieur et extérieur étant choisis en conformité avec ladite équation de sorte que les contractions relatives de la paire de sections de bague (A, B) sous l'effet de la pression hydraulique prédéterminée se traduiront par la déformation de la surface d'étanchéité (22) suivant une configuration désirée.

2. Joint mécanique assemblé selon la revendication 1, dans lequel la contraction de la section de bague (A) ayant la surface d'étanchéité (22) est sensiblement identique à celle de l'autre section de bague (B).

3. Joint mécanique assemblé selon la revendication 1, dans lequel la contraction de la section de bague (A) ayant la surface d'étanchéité (22) est supérieure à celle de l'autre section de bague (B).

4. Joint mécanique assemblé selon la revendication 1, dans lequel la contraction de la section de bague (A) ayant la surface d'étanchéité (22) est inférieure à celle de l'autre section de bague (B).

0 079 116

FIG-2

FIG-1

1